# EUROPEAN PATENT SPECIFICATION

(11) **EP 1 748 161 B1**
(45) Date of publication and mention of the grant of the patent: **21.11.2007**
(21) Application number: 06015601.5
(22) Date of filing: 26.07.2006
(51) Int. Cl.: F01N 1/00

(54) **Engine exhaust treatment apparatus and engine driving type heat pump apparatus using the same**
Vorrichtung zum Nachbehandeln von Abgasen einer Brennkraftmaschine und Brennkraftmaschine mit einer Wärmepumpenvorrichtung mit dieser Vorrichtung
Dispositif de traitement de gaz d'échappement et moteur comprenant une pompe à chaleur utilisant ce dispositif

(30) Priority: 29.07.2005 JP 2005220661
(43) Date of publication of application: 31.01.2007
(73) Proprietor: Sanyo Electric Co., Ltd., Moriguchi-shi, Osaka 570-8677 (JP)
(72) Inventor: Arai, Hiroshi, Kiryu-shi Gunma 376-0043 (JP); Negishi, Kazuhide, Ota-shi Gunma 370-0312 (JP); Tsuchiya, Yoshiro, Ota-shi Gunma 373-0813 (JP)
(74) Representative: Glawe, Delfs, Moll

(56) References cited:
- DE-A1- 3 007 962
- JP-A- 6 212 965
- JP-A- 6 248 944
- JP-A- 7 077 037
- JP-A- 7 259 549
- JP-A- 2002 295 923

## Description

### BACKGROUND OF THE INVENTION

### 1. Field of the Invention

The present invention relates to an engine exhaust treatment apparatus having a neutralizer for neutralizing condensed water and an engine driving type heat pump device using the engine exhaust treatment apparatus.

### 2. Description of the Related Art

There is generally known an engine driving type heat pump apparatus in which a compressor used in an air conditioner or the like is driven by an engine. This type of heat pump apparatus is provided with an exhaust gas treatment apparatus for discharging exhaust gas of the engine through a muffler and an exhaust top, neutralizing condensed water condensed in the muffler and the exhaust top by passing the condensed water through a neutralizer and then discharging the neutralized condensed water to the outside (for example, JP-A-2002-295923).

The above-described exhaust gas treatment apparatus is further equipped with a muffler return hose (return passage) for returning the condensed water condensed in the muffler to the neutralizer, and an exhaust top return hose (return passage) for returning the condensed water condensed in the exhaust top to the neutralizer, whereby the condensed water in the muffler and the condensed water in the exhaust top are returned to the neutralizer separately from each other.

In the construction as described above, muffler back pressure acts on the neutralizer, and thus the pressure in the neutralizer is increased. Therefore, when the condensed water of the exhaust gas is supplied through the exhaust top return hose to the neutralizer, there is a risk that the exhaust gas may flow back. When the back-flow occurs, abnormal noise would occur. Therefore, in order to prevent this phenomenon, there has been adopted such a construction that the condensed water is stocked in the neutralizer and the condensed water of the exhaust gas is injected into the condensed water stocked in the neutralizer together with the exhaust gas.

However, in the above-described construction, under a non-condensation environment such as a dry season, a cooling period or the like, the stock amount of the condensed water in the neutralizer is reduced, and this reduction causes breaks so-called liquid-sealing in the neutralizer, so that the abnormal noise problem as described above occurs.

### SUMMARY OF THE INVENTION

The present invention has been implemented in view of the foregoing problem described above, and has an object to provide an engine exhaust treatment apparatus that can solve the foregoing problem of the related art and thus prevent occurrence of abnormal noise due to back-flow of exhaust gas, and an engine driving type heat pump apparatus using the engine exhaust treatment apparatus.

In order to attain the above object, according to a first aspect of the present invention, an engine exhaust treatment apparatus for exhausting exhaust gas of an engine (30) from a muffler (101) and an exhaust top (102) and passing condensed water condensed in the muffler (101) and the exhaust top (102) through a neutralizer (103) to neutralize the condensed water, is characterized by further comprising a return passage (114) for passing the condensed water in the exhaust top to a site in the muffler at which the flow speed of the exhaust gas is higher in the muffler.

In the engine exhaust treatment apparatus, the return passage may return the condensed water in the exhaust top to the inlet of the muffler (101).

In the engine exhaust treatment apparatus, the muffler (101) may have a multiple chamber structure in which a plurality of expansion chambers (101A, 101B) intercommunicate with one another through an intercommunication pipe (101C), and the return passage (114) may return the condensed water in the exhaust top (102) to the inside of the intercommunication pipe (101C).

In the engine exhaust treatment apparatus, the muffler (101) may be further provided with a partition wall (101D) by which the expansion chambers are separated from each other.

In the engine exhaust treatment apparatus, the partition wall may have a small hole through which the condensed water in one (101B) of the expansion chambers is fed to the other chamber (101A).

According to a second aspect of the present invention, an engine driving type heat pump apparatus comprising an engine driving type compressor (16), an outdoor heat exchanger (19), and an engine exhaust treatment apparatus for exhausting exhaust gas of an engine (30) from a muffler (101) and an exhaust top (102) and passing condensed water condensed in the muffler (101) and the exhaust top (102) through a neutralizer (103) to neutralize the condensed water, is characterized in that the engine exhaust treatment apparatus comprises a return passage (114) for passing the condensed water in the exhaust top to a site in the muffler at which the flow speed of the exhaust gas is higher in the muffler.

In the engine exhaust treatment apparatus, the return passage may return the condensed water in the exhaust top to the inlet of the muffler (101).

In the engine exhaust treatment apparatus, the muffler (101) may have a multiple chamber structure in which a plurality of expansion chambers (101A, 101B) intercommunicate with one another through an intercommunication pipe (101C), and the return passage (114) returns the condensed water in the exhaust top (102) to the inside of the intercommunication pipe (101C).

In the engine exhaust treatment apparatus, the muffler (101) may be further provided with a partition wall (101D) by which the expansion chambers are separated from each other.

In the engine exhaust treatment apparatus, the partition wall may have a small hole through which the condensed water in one (101B) of the expansion chambers is fed to the other chamber (101A).

According to the present invention, the condensed water in the exhaust top is returned to the site at which the flow speed of the exhaust gas in the muffler is higher. Therefore, the condensed water is smoothly sucked into the muffler by the principle of the Venturi tube, and efficiently collected in the muffler. The condensed water thus collected is passed through a muffler return hose and returned to the neutralizer. Accordingly, no exhaust top return hose is required, and thus there is no risk that exhaust gas flows back through the hose concerned, and thus occurrence of abnormal noise caused by occurrence of the backflow can be suppressed.

### BRIEF DESCRIPTION OF THE DRAWINGS

Fig. 1 is a circuit diagram showing a refrigerant circuit of an air conditioner to which an embodiment of an engine driving type heat pump of the present invention is applied;
Fig. 2 is a flowchart showing an intake system/exhaust system and a drain of a gas engine according to an embodiment;
Fig. 3 is a flowchart showing an intake system/exhaust system and a drain of a gas engine according to another embodiment; and
Fig. 4 is a hose systematic diagram showing an exhaust treatment processing.

### DETAILED DESCRIPTION OF THE PREFERRED EMBODIMENTS

Preferred embodiments according to the present invention will be described hereunder with reference to the accompanying drawings.

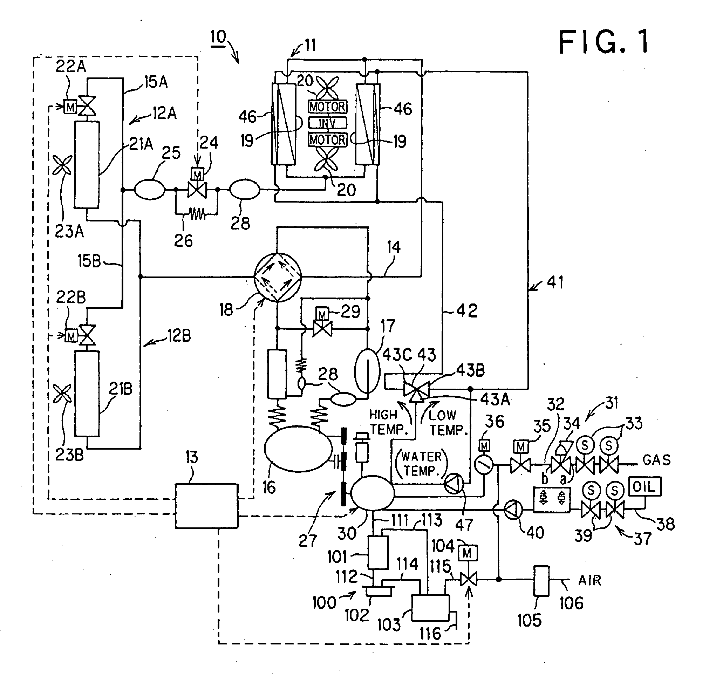

Fig. 1 is a circuit diagram showing a refrigerant circuit in can air conditioner to which an embodiment of an engine driving type heat pump device of the present invention is applied.

As shown in Fig. 1, an air conditioner 10 as a refrigerating machine has an outdoor unit 11, plural (for example, two) indoor units 12A and 12B and a control device 13, and an outdoor refrigerant pipe 14 of the outdoor unit 11 is connected to each of indoor refrigerant pipes 15A, 15B of the indoor units 12A, 12B.

The outdoor unit 11 is disposed outdoors, and a compressor 16 is disposed in the outdoor refrigerant pipe 14. In addition, an accumulator 17 is disposed at the suction side of the compressor 16, a four-way valve 18 is disposed at the discharge side of the compressor 16, and an outdoor heat exchanger 19, an outdoor expansion valve 24 and a dry core 25 are successively disposed at the four-way valve 18 side. An outdoor fan 20 for blowing air to the outdoor heat exchanger 19 is disposed so as to be adjacent to the outdoor heat exchanger 19. The compressor 16 is connected to a gas engine 30 through a flexible coupling 27, etc. so that the compressor 16 is driven by the gas engine 30. Furthermore, a bypass pipe 26 is disposed so as to bypass an outdoor expansion valve 24.

The indoor units 12A, 12B are disposed indoors, and indoor heat exchangers 21A, 21B are disposed in the indoor refrigerant pipes 15A, 15B, and indoor expansion valves 22A, 22B are disposed in the neighborhood of the indoor heat exchangers 21A, 21B in the indoor refrigerant pipes 15A, 15B, respectively. Furthermore, indoor fans 23A, 23B for blowing air to the indoor heat exchangers 21A, 21B respectively are disposed so as to be adjacent to the indoor heat exchangers 21A, 21B, respectively.

In Fig. 1, reference numeral 28 represents a strainer, and reference numeral 29 represents an electrically-operated valve for leaking refrigerant pressure at the discharge side of the compressor 16 to the suction side of the compressor 16.

The control device 13 is disposed in the outdoor unit 11 to control the operation of the outdoor unit 11 and the indoor units 12A, 12B. Specifically, the control device 13 controls the gas engine 30 (that is, the compressor 16), the four-way valve 18, the outdoor fan 20 and the outdoor expansion valve 24 of the outdoor unit 11, and the indoor expansion valves 22A, 22B and the indoor fans 23A, 23B of the indoor units 12A, 12B.

The four-way valve 18 is switched by the control device 13, whereby the air conditioner 10 is set to cooling operation or heating operation. That is, when the control device 13 switches the four-way valve 18 to the cooling operation side, the refrigerant flows as indicated by a solid-line arrow, the outdoor heat exchanger 19 serves as a condenser while the indoor heat exchangers 21A and 21B serve as evaporators, so that the air conditioning state is set to the cooling operation state and thus each of the indoor heat exchangers 21A, 21B cools each room. When the control device 13 switches the four-way valve 18,to the heating side, the refrigerant flows as indicated by a broken-line arrow, and the indoor heat exchangers 21A, 21B serve as condensers while the outdoor heat exchanger 19 serves as an evaporator, so that the air conditioning state is set to the heating operation and thus each of the indoor heat exchangers 21A, 21B heats each room.

Furthermore, under cooling operation, the control device 13 controls the valve opening degree of each of the indoor expansion valves 22A, 22B in accordance with the air conditioning load. During heating operation, the control device 13 controls the valve opening degree of each of the outdoor expansion valve 24 and the indoor expansion valves 22A, 22B in accordance with the air conditioning load.

Air-fuel mixture of fuel and air is supplied from an engine fuel supply device 31 into the combustion chamber of the gas engine 30 for driving the compressor 16. The engine fuel supply device 31 is constructed by successively disposing a fuel shut-off valve 33, a zero governor 34, a fuel adjusting valve 35 and a throttle valve 36 in a fuel supply pipe 32, and connecting an end portion of the fuel supply pipe 32 at the throttle valve 36 side to the combustion chamber of the gas engine 30.

The fuel shut-off valve 33 constitutes a closed type fuel shut-off valve mechanism, and the fuel shut-off valve 33 is fully closed or fully opened, whereby shut-off having no leakage of fuel gas and intercommunication can be selectively performed.

According to the zero governor 34, with respect to the primary side fuel gas pressure (primary pressure a) and the secondary side fuel gas pressure (secondary pressure b) before and after the zero governor 34 in the fuel supply pipe 32, the secondary pressure b can be also adjusted to fixed predetermined pressure by varying the primary pressure a, thereby stabilizing the operation of the gas engine 30.

The fuel adjusting valve 35 adjusts the air-fuel mixture generated by introducing air from the upstream side of the throttle valve 36 so that the air-fuel mixture is optimum. An air supply pipe 106 for sucking air from the outside of the engine unit is connected to the upstream side of the throttle valve 36. An air filter 105 is disposed at the suction port of the air supply pipe 106.

Furthermore, the throttle valve 36 adjusts the supply amount of the air-fuel mixture supplied to the combustion chamber 30A of the gas engine 30 to control the number of revolutions of the gas engine 30.

An engine oil supply device 37 is connected to the gas engine 30. The engine oil supply device 37 includes an oil shut-off valve 39, an oil supply pump 40, etc. in an oil supply pipe 38 and properly supplies engine oil to the gas engine 30.

Furthermore, the gas engine 30 is cooled by engine cooling water circulated in an engine cooling device 41. The engine cooling device 41 is equipped with a cooling water pipe 42, and a wax type three-way valve 43, a radiator 46 and a circulating pump 47 are successively disposed in the cooling water pipe 42. the circulating pump 47 increases the pressure of the engine cooling water at the actuation time thereof to circulate the engine cooling water in the cooling water pipe 42.

The wax type three-way valve 43 quickly warms the gas engine 30. The inlet 43A of the wax type three-way valve 43 is connected to an exhaust gas heat exchanger side provided to the gas engine 30 in the cooling water pipe 42, the low-temperature side outlet 43B of the wax type three-way valve 43 is connected to the suction side of the circulating pump 47 in the cooling water pipe 42, and the high-temperature side outlet 43C of the wax type three-way valve 43 is connected to the radiator 46 side in the cooling water pipe 42.

Specifically, the control device 13 controls the fuel shut-off valve 33, the zero governor 34, the fuel adjusting valve 35 and the throttle valve 36 of the engine fuel supply device 31, the oil shut-off valve 39 and the oil supply pump 40 of the engine oil supply device 37 and the circulating pump 47 of the cooling device 41, whereby the control device 13 controls the gas engine 30.

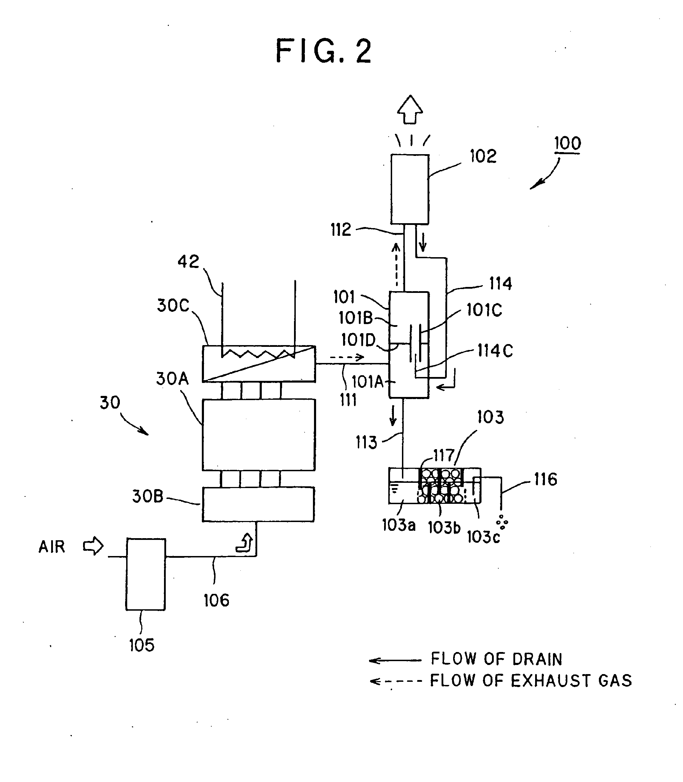

According to this embodiment, an exhaust treatment device 100 is connected to the exhaust side of the gas engine 30 as shown in Fig. 2. The exhaust treatment device 100 comprises the gas engine 30, a muffler 101, an exhaust top 102 and a neutralizer 103. An in-take manifold 30B is provided to the suction side of the combustion chamber 30A of the gas engine 30, and an air supply pipe 106 for supplying air from the outside of the engine unit is connected to the suction side of the in-take manifold 30B. Reference numeral 105 represents an air filter. An exhaust gas heat exchanger 30C is provided at the exhaust side of the combustion chamber 30A of the gas engine 30.

The exhaust gas heat exchanger 30C heat-exchanges the engine cooling water flowing through the cooling water pipe 42 of the cooling device 41 and the exhaust gas of the engine.

The exhaust gas flowing through the exhaust gas heat exchanger 30C and the engine cooling water circulated in the engine cooling device 41 are heat-exchanged with each other, so that the exhaust gas is cooled to, for example, about 100°C in the exhaust gas heat exchanger 30C. The water vapor in the exhaust gas is cooled and condensed in the exhaust gas heat exchanger 30C, and condensed water (hereinafter referred to as drain) and the exhaust gas are discharged.

Harmful materials in the exhaust gas such as SOₓ, NOₓ, etc. are dissolved in the drain generated by cooling the exhaust gas.

The exhaust side of the exhaust gas heat exchanger 30C and the suction side of the muffler 101 (an expansion chamber 101A described later) are connected to each other through an exhaust hose 111. The muffler 101 is designed to have a multiple chamber structure in which the inside of the muffler 101 is partitioned by a partition plate 101D having a small hole (not shown) so as to have plural (two) expansion chambers 101A, 101B and the respective expansion chambers 101A and 101B intercommunicate with each other through an intercommunication pope 101C penetrating through the partition plate 101D, and thus it absorbs the expansion and contraction of the gas flowing into the muffler 101 and the sound energy due to the resonance effect.

The drain and the exhaust gas which are exhausted from the exhaust gas heat exchanger 30C flow into the expansion chamber 101A. The drain is separated from the exhaust gas in the expansion chamber 101A, and then the exhaust gas flows into the expansion chamber 101B through the intercommunication pipe 101C. Furthermore, the drain is further separated from the exhaust gas flowing into the expansion chamber 101B, and then the exhaust gas is directed to the exhaust top 102.

The drain stocked in the expansion chamber 101B of the muffler 101 is guided through the small hole of the partition plate 101D into the neutralizer 103 together with the drain stocked in the expansion chamber 101A. The neutralizer 103 neutralizes the harmful materials such as SOₓ, NOₓ, etc. contained in the drain.

The muffler 101 and the exhaust top 102 are connected to each other through an exhaust hose 112, and the exhaust gas passing through the expansion chamber 101B of the muffler 101 flows through the exhaust hose 112 into the exhaust top 102. The exhaust gas is cooled in the exhaust top 102, the water vapor in the exhaust gas is cooled and thus drain occurs. The final exhaust gas is exhausted through the exhaust top 102 to the outside.

The drain occurring in the exhaust top 102 is returned through an exhaust top return hose 114 to the inside or inlet of the intercommunication pipe 101C of the muffler 101. The inside of the intercommunication pipe 101C corresponds to a site at which the exhaust gas flows at a higher speed in the muffler 101. Accordingly, when the drain is returned to this site, the drain is smoothly sucked into the muffler 101 on the basis of the principle of a venturi tube. Accordingly, the drain occurring in the exhaust top 102 is effectively collected into the muffler 101. The collected drain is stocked in the expansion chamber 101A or 101B. The drain stocked in the expansion chamber 101B flows through the small hole of the partition plate 101D into the expansion chamber 101A, and it is guided through the muffler return hose 113 to the neutralizer 103 to the neutralizer 103 together with the drain stocked in the expansion chamber 101A.

The harmful materials such as SOₓ, NOₓ, etc. solved in the drain fed to the neutralizer 103 are removed by neutralizing agent disposed in the neutralizer 103. The drain neutralized in the neutralizer 103 is discharged through the drain discharge hose 116 to the outside.

The inside of the main body of the neutralizer 103 is partitioned into a flow-in space 103a, a neutralizing space 103b and a discharge space 103c by a plate having many small holes or the like. A muffler return hose 113 is inserted in the flow-in space 103a. The drain occurring in the muffler 101 and the exhaust top 102 is stocked in the flow-in space 103a.

In the neutralizing space 103b, the drain stocked in the flow-in space 103a is neutralized by the neutralizing agent filled in the neutralizing space 103b. Here, the neutralizing agent contains alkali components such as limestone (marble, calcium carbonate), etc. The neutralizing space 103b has plural partition walls 117 projecting from the bottom surface and top surfaceoftheneutralizingspace 103b, andeachofthesepartition walls 117 extends to some midpoint of the space of the neutralizing space 103b. A meandering passage is formed in the neutralizing space 103b by these partition walls 117. The drain neutralized in the neutralizing space 103b is stocked in the exhaust space 103c. A drain exhaust hose 116 is connected to the exhaust space 103c, and the tip of the drain exhaust hose 116 is inserted till the neighborhood of the bottom portion of the exhaust space 103c. The neutralized drain trapped in the exhaust space 103c is discharged through the drain exhaust hose 116 to the outside.

In this embodiment, the drain occurring in the exhaust top 102 is returned and sucked to the inside of the intercommunication pipe 101C of the muffler 101 through the exhaust top return hose 114. Therefore, an exhaust top return hose for directly returning the drain occurring in the exhaust top 102 to the neutralizer is not required unlike the related art. Therefore, there is no risk that the exhaust gas flows back through the hose concerned, so that occurrence of abnormal noise caused by occurrence of the backflow can be suppressed.

Furthermore in this construction, particularly under such a non-condensation atmosphere as a dry season, a cooling period or the like, no backflow occurs and thus there occurs no abnormal noise caused by the backflow even when the stock amount of the drain in the neutralizer 103 is reduced.

Furthermore, the exhaust top return hose 114 is bent in a substantially U-shape at the muffler 101 side, and the tip 114C thereof is inserted into the inside of the intercommunication pipe 101C. Therefore, the drain is trapped at the substantially U-shaped portion, so that backflow in the exhaust top return hose 114 is prevented and occurrence of the abnormal noise is effectively suppressed.

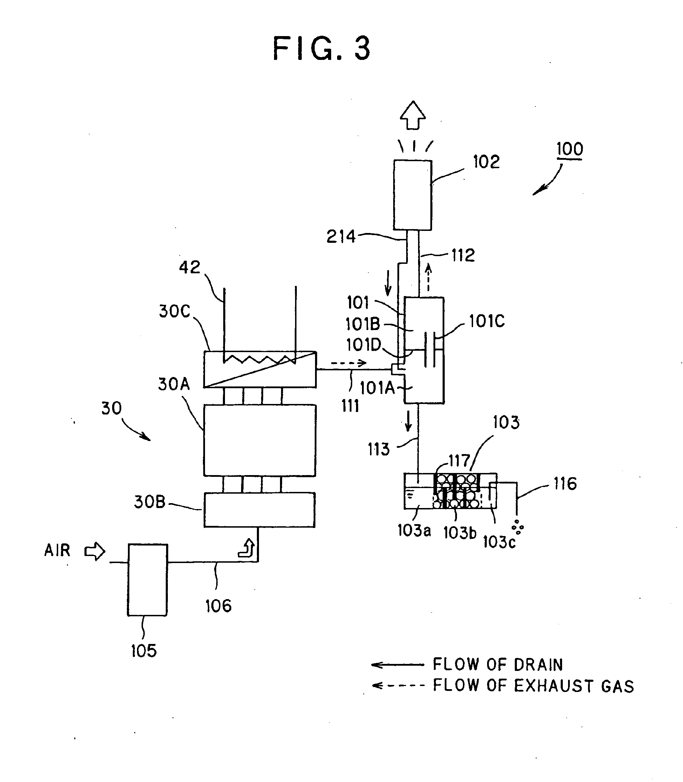

Fig. 3 shows another embodiment.

In this embodiment, the drain occurring in the exhaust top 102 is returned through the exhaust top return hose 214 to the inlet 101E of the muffler 101. The inlet 101 corresponds to a site at which the exhaust gas flows at a high speed in the muffler 101. Accordingly, when the drain is returned to this site, the drain is smoothly sucked into the muffler 101 by the principle of the Venturi tube as described above. Accordingly, the drain occurring in the exhaust top 102 is efficiently collected in the muffler 101. The collected drain is stocked in the expansion chamber 101A or 101B. The drain stocked in the expansion chamber 101B flows into the expansion chamber 101A through the small hole of the partition plate 101D as described, and it is guided to the neutralizer 103 through the muffler return hose 113 together with the drain stocked in the expansion valve 101A.

The harmful materials in the exhaust gas such as SOₓ, NOₓ, etc. dissolved in the drain are removed from the drain fed to the neutralizer 103 by the neutralizing agent disposed in the neutralizer 103. The drain neutralized by the neutralizer 103 is discharged through the drain exhaust hose 116 to the outside.

In this embodiment, the drain occurring in the exhaust top 102 is returned and sucked to the inlet 101E of the muffler 101 through the exhaust top return hose 214. Therefore, an exhaust top return hose for directly returning the drain occurring in the exhaust top 102 to the neutralizer is not required unlike the related art. Therefore, there is no risk that the exhaust gas flows back through the hose concerned, so that occurrence of abnormal noise caused by occurrence of the backflow can be suppressed.

Furthermore, particularly under such a non-condensation atmosphere as a dry season, a cooling period or the like, no backflowoccurs because the exhaust top return hose for connecting the neutralizer 103 and the exhaust top 102 does not exist, and thus there occurs no abnormal noise caused by the backflow even when the stock amount of the drain in the neutralizer 103 is reduced.

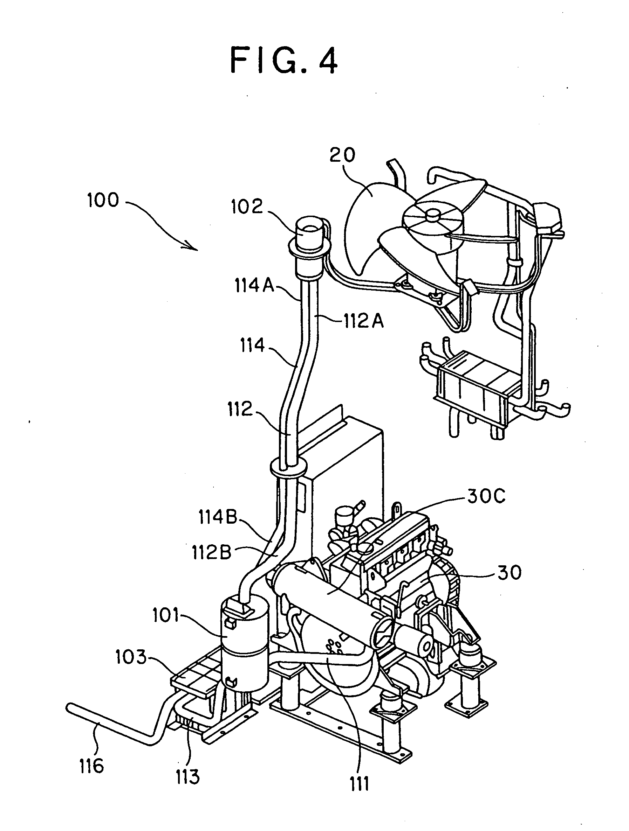

Fig. 4 is a hose systematic diagram showing an exhaust treatment device.

That is, as described above, the exhaust gas heat exchanger 30C is appended to the gas engine 30, the exhaust hose 111 is connected to the exhaust gas heat exchanger 30C and the exhaust hose 111 is connected to the muffler 101. The exhaust hose 112 is connected to the muffler 101, and the exhaust top 102 is connected to the exhaust hose 112. Furthermore, the exhaust top return hose 114 is connected to the exhaust top 102, and the exhaust top return hose 114 is connected to the site at which the flow speed of the exhaust gas in the muffler 101 is high. Still furthermore, the muffler return hose 113 is connected to the muffler 101, the muffler return hose 113 is connected to the neutralizer 103, and the drain exhaust hose 116 is connected to the neutralizer 103.

With respect to the hose material of the exhaust gas system, fluorine rubber is generally used for the inner surface of the hose because of heat resistance, acid resistance, resistance to engine oil, etc., and acrylic rubber is used for the outer surface of the hose because it is excellent in heat resistance. Here, from the viewpoint of material cost and resource saving, it is preferable to select a proper hose material in accordance with the site being used. With respect to the hoses at the small-vibration sites such as the hose 112A, 112B, 114A, 114B, 113, etc., it is preferable to use a hose having steam-resistant silicon rubber on the inner surface and economy silicon rubber on the outer surface. With respect to the hoses at the sites at which the engine oil does not stocked, for example, the hoses 113A, 112B, etc. arranged in erect posture, it is preferable to use vulcanized peroxide ethylene propylene rubber.

The present invention is not limited to the above-described embodiment, and various modifications may be made to the above-described embodiment. For example, the return ports of the exhaust top return hoses 114, 214 are not limited to the above-described positions, and any position may be adopted insofar as it is set to a site at which the flow speed of the exhaust gas in the muffler 101 is high.

## Claims

1. An engine exhaust treatment apparatus for exhausting exhaust gas of an engine (30) from a muffler (101) and an exhaust top (102) and passing condensed water condensed in the muffler (101) and the exhaust top (102) throughaneutralizer (103) toneutralize the condensed water, characteri zed by further comprising a return passage (114) for passing the condensed water in the exhaust top to a site in the muffler at which the flow speed of the exhaust gas is higher in the muffler.

2. The engine exhaust treatment apparatus according to claim 1, wherein the return passage returns the condensed water in the exhaust top to the inlet of the muffler (101).

3. The engine exhaust treatment apparatus according to claim 1, wherein the muffler (101) has a multiple chamber structure in which a plurality of expansion chambers (101A, 101B) intercommunicate with one another through an intercommunication pipe (101C), and the return passage (114) returns the condensed water in the exhaust top (102) to the inside of the intercommunication pipe (101C).

4. The engine exhaust treatment apparatus according to claim 3, wherein the muffler (101) is further provided with a partition wall (101D) by which the expansion chambers are separated from each other.

5. The engine exhaust treatment apparatus according to claim 4, wherein the partition wall has a small hole through which the condensed water in one (101B) of the expansion chambers is fed to the other chamber (101A) .

6. An engine driving type heat pump apparatus comprising an engine driving type compressor (16), an outdoor heat exchanger (19), and an engine exhaust treatment apparatus for exhausting exhaust gas of an engine (30) from a muffler (101) and an exhaust top (102) and passing condensed water condensed in the muffler (101) and the exhaust top (102) through a neutralizer (103) to neutralize the condensed water, **characterized in that** the engine exhaust treatment apparatus comprises a return passage (114) for passing the condensed water in the exhaust top to a site in the muffler at which the flow speed of the exhaust gas is higher in the muffler.

7. The engine exhaust treatment apparatus according to claim 6, wherein the return passage returns the condensed water in the exhaust top to the inlet of the muffler (101).

8. The engine exhaust treatment apparatus according to claim 6, wherein the muffler (101) has a multiple chamber structure in which a plurality of expansion chambers (101A, 101B) intercommunicate with one another through an intercommunication pipe (101C) , and the return passage (114) returns the condensed water in the exhaust top (102) to the inside of the intercommunication pipe (101C).

9. The engine exhaust treatment apparatus according to claim 8, wherein the muffler (101) is further provided with a partition wall (101D) by which the expansion chambers are separated from each other.

10. The engine exhaust treatment apparatus according to claim 9, wherein the partition wall has a small hole through which the condensed water in one (101B) of the expansion chambers is fed to the other chamber (101A).

## Patentansprüche

1. Maschinenabgasbehandlungsgerät zum Abgeben von Abgas einer Maschine (3) aus einem Schalldämpfer (101) und einem Auspuffoberteil (102) und zum Durchlassen von kondensiertem Wasser, das in dem Schalldämpfer (101) und in dem Auspuffoberteil (102) kondensiert, durch einen Neutralisator (103), um das kondensierte Wasser zu neutralisieren, ***gekennzeichnet durch*** ferner einer Rückführung (114) zum Passieren des kondensierten Wassers in das Auspuffoberteil an einer Stelle in dem Schalldämpfer, in dem die Flussgeschwindigkeit des Abgases in dem Schalldämpfer größer ist.

2. Maschinenabgasbehandlungsgerät nach Anspruch 1, wobei die Rückführung das kondensierte Wasser in dem Auspuffoberteil zum Einlass des Schalldämpfers (101) rückführt.

3. Maschinenabgasbehandlungsgerät nach Anspruch 1, wobei der Schalldämpfer (101) eine Mehrfachkammerstruktur aufweist, in der eine Anzahl von Expansionskammern (101A, 101B) miteinander durch eine Verbindungsleitung (101C) kommunizieren, und die Rückführung (114) das kondensierte Wasser in dem Auspuffoberteil (102) zur Innenseite der Verbindungsleitung (101C) rückführt.

4. Maschinenabgasbehandlungsgerät nach Anspruch 3, wobei der Schalldämpfer (101) ferner eine Teilungswand (101D) aufweist, durch die die Expansionskammern voneinander getrennt werden.

5. Maschinenabgasbehandlungsgerät nach Anspruch 4, wobei die Teilungswand eine kleine Öffnung aufweist, durch die das kondensierte Wasser in einer (101B) der Expansionskammern zur anderen Kammer (101A) geleitet wird.

6. Wärmepumpenvorrichtung vom Maschinenantriebstyp mit einem Kompressor (16) vom Maschinenantriebstyp, einem Außenwärmetauscher (19) und einem Maschinenabgasbehandlungsgerät zum Abgeben von Abgas einer Maschine (30) aus einem Schalldämpfer (101) und einem Auspuffoberteil (102) und zum Durchlassen von kondensiertem Wasser, das in dem Schalldämpfer (101) und in dem Auspuffoberteil (102) kondensiert, durch einen Neutralisator (103) zum Neutralisieren des kondensierten Wassers, ***dadurch gekennzeichnet,* dass** das Maschinenabgasbehandlungsgerät eine Rückführung (114) aufweist zum Durchlassen des kondensierten Wassers in dem Auspuffoberteil an eine Stelle in dem Schalldämpfer, in dem die Flussgeschwindigkeit des Abgases im Schalldämpfer höher ist.

7. Maschinenabgasbehandlungsgerät nach Anspruch 6, wobei die Rückführung das kondensierte Wasser in dem Auspuffoberteil an den Einlass des Schalldämpfers (101) rückführt.

8. Maschinenabgasbehandlungsgerät nach Anspruch 6, wobei der Schalldämpfer (101) eine Mehrfachkammerstruktur aufweist, in der eine Anzahl von Expansionskammern (101A, 101B) miteinander über eine Verbindungsleitung (101C) kommunizieren, wobei die Rückführung (114) das kondensierte Wasser in dem Auspuffoberteil (102) an die Innenseite der Verbindungsleitung (101C) rückführt.

9. Maschinenabgasbehandlungsgerät nach Anspruch 8, wobei der Schalldämpfer (101) ferner mit einer Teilungswand (101D) versehen ist, durch die die Expansionskammern voneinander getrennt werden.

10. Maschinenabgasbehandlungsgerät nach Anspruch 9, wobei die Teilungswand eine kleine Öffnung aufweist, durch die das kondensierte Wasser in einer (101B) der Expansionskammern zu der andern Expansionskammer (101A) geleitet wird.

## Revendications

1. Dispositif de traitement de gaz d'échappement de moteur pour l'évacuation des gaz d'échappement d'un moteur (30) provenant d'un silencieux (101) et d'un pot d'échappement (102), et pour le passage de l'eau condensée, condensée dans le silencieux (101) et le pot d'échappement (102), à travers un neutralisateur (103) afin de neutraliser l'eau condensée, **caractérisé en ce qu'**il comprend en outre un passage de retour (114) pour amener l'eau condensée dans le pot d'échappement à un site du silencieux où la vitesse d'écoulement des gaz d'échappement est la plus élevée dans le silencieux.

2. Dispositif de traitement de gaz d'échappement de moteur selon la revendication 1, dans lequel le passage de retour ramène l'eau condensée du pot d'échappement à l'entrée du silencieux (101).

3. Dispositif de traitement de gaz d'échappement de moteur selon la revendication 1, dans lequel le silencieux (101) comprend une structure à chambres multiples dans laquelle une pluralité de chambres de détente (101A, 101B) communiquent les unes avec des autres par un tuyau d'intercommunication (101C), et le passage de retour (114) ramène l'eau condensée dans le pot d'échappement (102) à l'intérieur du tuyau d'intercommunication (101C).

4. Dispositif de traitement de gaz d'échappement de moteur selon la revendication 3, dans lequel le silencieux (101) comprend en outre une cloison (101D) par laquelle les chambres de détente sont séparées les unes des autres.

5. Dispositif de traitement de gaz d'échappement de moteur selon la revendication 4, dans lequel la cloison comporte un petit trou à travers lequel l'eau condensée dans une (101B) des chambres de détente est envoyée à l'autre chambre (101A).

6. Pompe à chaleur du type à entraînement, par moteur, comprenant un compresseur du type à entraînement par moteur (16), un échangeur de chaleur extérieur (19à) et un dispositif de traitement des gaz d'échappement de moteur pour traiter les gaz d'échappement d'un moteur (30) provenant d'un silencieux (101) et d'un pot d'échappement (102), et l'eau condensée, condensée dans le silencieux (101) et le pot d'échappement (102), passe à travers un neutralisateur (103) pour neutraliser l'eau condensée, **caractérisée en ce que** le dispositif de traitement de gaz d'échappement du moteur comprend un passage de retour (114) pour faire passer l'eau condensée du pot d'échappement à un site dans le silencieux où la vitesse d'écoulement des gaz d'échappement est plus grande dans le silencieux.

7. Dispositif de traitement de gaz d'échappement de moteur selon la revendication 6, dans lequel le passage de retour ramène l'eau condensée dans le pot d'échappement à l'entrée du silencieux (101).

8. Dispositif de traitement de gaz d'échappement de moteur selon la revendication 6, dans lequel le silencieux (101) a une structure à chambres multiples dans laquelle une pluralité de chambres de détente (101A, 101B) communiquent les unes avec les autres, par l'intermédiaire d'un tuyau d'intercommunication (101C), et le passage de retour (114) ramène l'eau condensée dans le pot d'échappement (102) à l'intérieur du tuyau d'intercommunication (101C).

9. Dispositif de traitement de gaz d'échappement de moteur selon la revendication 8, dans lequel le silencieux (101) comporte en outre une cloison (101D) par laquelle les chambres de détente sont séparées l'une de l'autre.

10. Dispositif de traitement de gaz d'échappement de moteur selon la revendication 1, dans lequel la cloison comporte un petit trou à travers lequel l'eau condensée dans une (101B) des chambres de détente est envoyée à l'autre chambre (101A).
